# EUROPEAN PATENT APPLICATION

(11) **EP 1 248 193 A1**
(43) Date of publication of application: **09.10.2002**
(21) Application number: 01410035.8
(22) Date of filing: 02.04.2001
(51) Int. Cl.: G06F 9/45, G06F 9/445

(54) **Initialisation module for a device driver**

(71) Applicant: Hewlett-Packard Company, Palo Alto, CA 94304 (US)
(72) Inventor: Owhadi, Eric, 38360 Sassenage (FR)
(74) Representative: Lloyd, Richard Graham

(57) **Abstract**

An initialisation module for a device driver, the module being operable to:
a) locate a first device control code having a first format and
b) read said first device control code,
c) disassemble said first device control code to generate an intermediate code, and
d) assemble said intermediate code to generate a second device control code having a second format.

## Description

### Field of the Invention

The present invention relates to an initialisation module for a device driver, and particularly but not exclusively to an initialisation module for a network interface card driver.

### Background of the Invention

To enable a standard PC to interface with a network, it is known to provide the computer with an appropriate network interface card (NIC). To use the NIC, the computer requires suitable software, known as a driver. Because a number of different manufacturers supply NIC's, each of which may have a driver specific to that NIC, it will be apparent that where a computer is provided with a number of NIC's or where an NIC is changed, the management and use of the hardware dependant drivers can present a problem.

To address this problem, a standard has been developed, the Universal Network Device Interface (UNDI) standard. A compiled UNDI driver interface code is provided, either resident in an option Read Only Memory (ROM) on the NIC or provided on the PC board as part of the BIOS ROM. The UNDI driver interface code can accept instructions from a generic hardware independent driver and send the appropriate instructions to the NIC. Thus, a computer may be provided with a hardware independent driver able to operate all compatible NIC's, and the hardware dependant code is provided in ROM, either on the card or the computer mother board.

Where a PC is compatible with the "Wired for Management" (WfM) standard, such a PC must be UNDI compatible. Under WfM, during a network boot the UNDI driver interface code is loaded into the computer's upper memory area (UMA) in the pre-boot execution environment (PXE) to enable a network boot program to be downloaded. Thus, in any WfM compatible PC the UNDI code will be present either as an option ROM on the NIC or on the board BIOS, even if it is not intended to make use of the network boot capability.

The UNDI standard presently only covers 16-bit operation for use in a "DOS like" pre-boot environment. For a 32-bit environment, this UNDI standard is not appropriate. A 32-bit UNDI standard has been proposed where the NIC option ROM or BIOS ROM will contain compiled 32-bit UNDI code. However, where only 32-bit UNDI code is provided, there will be no retro-compatibility with 16-bit systems. Alternatively, it will be possible to provide both 16-bit and 32-bit UNDI code in the NIC or BIOS ROM, but this will incur correspondingly increased costs in view of the additional ROM space required.

An aim of the invention is to reduce or overcome the problem described above.

### Summary of the Invention

According to a first aspect of the invention, we provide an initialisation module for a device driver, the module being operable to;
a) locate a first device control code having a first format,
b) read said first device control code,
c) disassemble said first device control code to generate an intermediate code, and
d) assemble said intermediate code to generate a second device control code having a second format.

The initialisation module may be operable to load the second device control code to a main memory, for example to a standard location in the computer's main memory and preferably also store the second device control code in a non-volatile storage medium, such as onto a hard drive of the computer.

Prior to locating the first device control code, the initialisation module may be operable to search the non-volatile storage medium for a second device control code stored therein, and if found to load the second device control code to the computer's main memory.

The module may be operable to locate the first device control code by searching for a characteristic part of the first device control code.

The initialisation module may be operable to locate the first device control code in an upper memory area of the computer and/or in a ROM in which the first device control code is stored by directly addressing the ROM.

The first format may comprise 16-bit code and the second format may comprise 32-bit code.

The device driver may comprise a network interface card driver and the first device control code and second device control code may comprise UNDI-compatible code.

According to a second aspect of the invention, we provide a method of initialising a device driver comprising the steps of;
a) locating a first device control code having a first format,
b) reading said first device control code,
c) disassembling said first device control code to generate an intermediate code, and
d) assembling said intermediate code to generate a second device control code having a second format.

The method may be performed during a boot sequence, or alternatively after completion of a boot sequence.

The present invention thus addresses the above problem by identifying the UNDI compiled code, either in the computer upper memory area, or by directly addressing the ROM in which the UNDI code is stored, disassembling the 16-bit compiled code to provide an intermediate code, and assembling the intermediate code to provide a 32-bit compiled code. Thus, a network interface card provided with 16-bit UNDI code may be used with a computer having a 32 bit environment.

### Brief Description of the Drawings

The present invention will now be described by way of example only with reference to the accompanying drawings wherein;
Figure 1 is a diagrammatic view of a conventional personal computer,
Figure 2 is a diagram of the conventional architecture of a system provided with a network interface card,
Figure 3 is a flow diagram illustrating the operation of an initialisation module according to the present invention.

### Description of the Preferred Embodiments

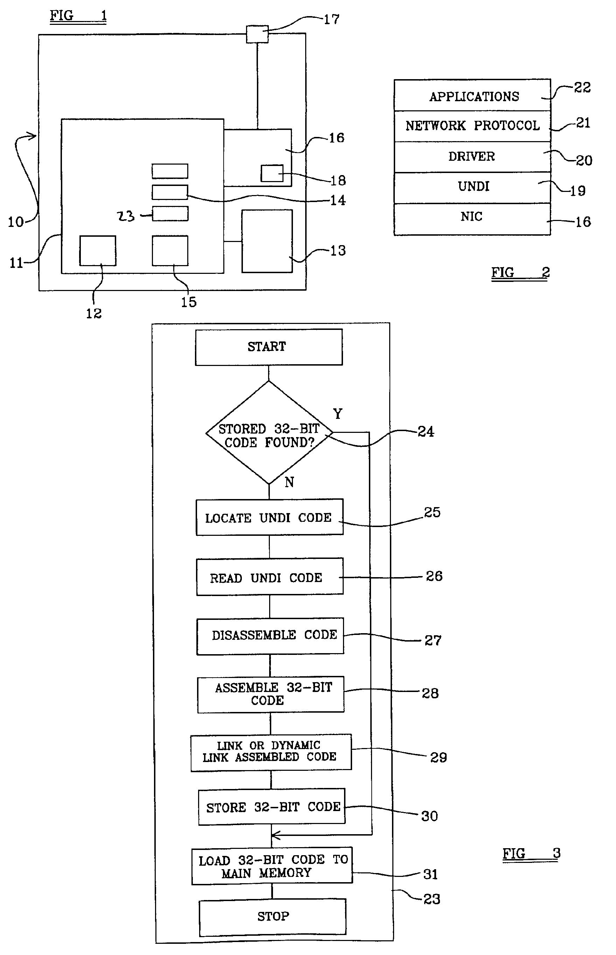

Referring to Figure 1, a personal computer of known type is generally indicated at 10 comprising a motherboard 11 provided with a CPU 12. The computer 10 is further provided with a non-volatile storage medium, in the present example comprising a hard drive 13, a volatile memory in the form of random access memory (RAM) indicated at 14, referred to as the "main memory", and a BIOS ROM generally indicated at 15.

The computer 10 is provided with a generally conventional operating system, except as discussed below. To provide network access, the computer 10 comprises a network interface card (NIC) 16 which is connected via a suitable port 17 to a network. Provided in an option ROM 18 on the network card 16 is a device control code which is UNDI compatible. As discussed above, and with reference to Figure 2, the UNDI device control code 19 provides an interface between the network interface card 16 and a hardware independent driver 20. Access to the network by the computer is controlled using a conventional network protocol 21 which can be addressed by applications 22 running on the computer 10.

In the present example, the CPU 12 and the operating system running on the computer 10 provide a 32-bit environment, while the UNDI code is stored on the NIC ROM in the form of 16-bit code. As discussed above, the 16-bit UNDI code is incompatible with a 32-bit environment. To overcome this problem, the operating system is provided with an initialisation module 23 to convert the 16-bit UNDI code to a 32-bit format.

The invention operates in the following manner;

Following turn-on or re-boot, the computer 10 boots in conventional manner. During boot of the operating system, and preferably during the driver initialisation phase, the initialisation module 23 is called and performs the operations shown in Figure 3. As shown in Figure 3, at step 24 the initialisation module 23 first checks whether the UNDI code has previously been assembled in a 32-bit format and stored in a non-volatile storage medium, in the present example on the hard disk 13. If a previously compiled version has not been found, the module 23 at step 25 then searches for the location of the 16-bit UNDI code. The code may generally be found in one of two alternative locations. Firstly, when the computer 10 comprises a WfM compliant device, as part of the PXE procedure the UNDI code is loaded into the upper memory area. When the network boot is not required or not successful, the computer 10 then proceeds to a local boot. The UNDI code may be deleted from RAM as part of a "graceful failure" routine, but alternatively may remain in the memory and may be accessed by the initialisation module 23. Alternatively, where no network boot is attempted or where the UNDI code is deleted from RAM, the ROM containing the UNDI code, i.e. the option ROM 18 on the NIC 16 or BIOS ROM 15 on the motherboard 11, may be addressed directly. Of course, where the ROM containing the UNDI code is shadowed into RAM, the shadow RAM may be addressed as this will generally be faster than addressing the ROM directly. Since the address of the UNDI code may vary across different NIC's, the module 23 may search for the start of the UNDI code by looking for a characteristic feature of the code, for example by looking for the header _UNDI_. Where the UNDI is to be read from ROM, it is preferable that the UNDI code be stored in the ROM in uncompressed form, to facilitate identification of the UNDI code and to remove the need for a decompression step. It will also be apparent that where the UNDI code is stored at a standard or known address, the step of searching for the UNDI code is greatly simplified.

Once the UNDI code has been located, the code may then be read from the ROM at step 26 and disassembled at step 27 in conventional manner to provide an intermediate code. The intermediate code will conventionally be in the form of assembly language. The intermediate code may then, at step 28, be assembled in 32-bit form. The disassembly of the 16-bit UNDI code and assembly into 32-bit UNDI code are conventional, and may be performed by dissembler and assembler routines provided in the module 23 or by calling dissembler and assembler routines of conventional type provided separately. As the 16-bit format permits code segments to contain both code and data, not permitted in 32-bit format, it is essential that the disassembly and assembly steps separate code and data into separate code segments. At step 29, the assembled 32-bit UNDI code is linked in conventional manner to provide an executable file. The code may be static linked or dynamic linked as appropriate.

At step 30, the assembled and linked 32-bit UNDI code is then saved to a suitable non-volatile storage medium such as the hard disk 13. Finally, at step 31, the compiled UNDI code is loaded into the computers main memory, where it may be called by the hardware independent driver 20.

The initialisation module according to the present invention thus allows NIC's chipped with 16-bit UNDI code to be installed in both 16-bit and 32-bit computers thus providing retro-compatibility and desired hardware stability without incurring the costs of chipping the NIC's with both 16-bit and 32-bit UNDI code.

It is envisaged that the module 23 would be provided as part of the operating system code, and be invoked during the operating system boot process. The module 23 could be provided otherwise in hardware or software as desired. It might be envisaged that the module 23 could be called after the boot sequence is complete and only when it is desired to first address the NIC 16. It will also be apparent that the assembled 32-bit code need not be saved to a local non-volatile storage medium, and that the disassembly and assembly process could occur each time the computer is booted.

Although the above description refers to disassembly and assembly of the UNDI code, it will be apparent that any appropriate de-compilation and compilation process may be used as desired.

It is primarily envisaged that the invention will be used where a WfM-compliant computer performs a non-network boot, but it would be apparent to one of skill in the art that an initialisation module 23 according to the first aspect of the invention and the method of the second aspect of the invention might be adapted for use in connection with a network boot. It will also be apparent that the invention may be used in connection with other devices than NICs where appropriate.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An initialisation module (23) for a device driver (20), the module (23) being operable to:
a) locate a first device control code having a first format,
b) read said first device control code,
c) disassemble said first device control code to generate an intermediate code, and
d) assemble said intermediate code to generate a second device control code having a second format.

2. An initialisation module according to claim 1 operable to load the second device control code to a main memory.

3. An initialisation module according to claim 1 or claim 2 operable to store the second device control code in a non-volatile storage medium (13).

4. An initialisation module according to claim 3 operable, prior to locating said first device control code, to search said non-volatile storage medium (13) for a second device control code stored therein, and if found to load the second device control code to a main memory.

5. An initialisation module according to any one of the preceding claims operable to locate said first device control code by searching for a characteristic part of said first device control code.

6. An initialisation module according to claim 5 operable to locate said first device control code in an upper memory area.

7. An initialisation module according to claim 5 or claim 6 operable to locate said first device control code in a ROM (18) in which the first device control code is stored by directly addressing the ROM (18).

8. An initialisation module according to any one of the preceding claims wherein the first format comprises 16-bit code and the second format comprises 32-bit code.

9. An initialisation module according to any one of the preceding claims wherein the device driver comprises a network interface card driver (20) and the first device control code and second device control code comprise UNDI compatible code.

10. A method of initialising a device driver comprising the steps of
a) locating a first device control code having a first format,
b) reading said first device control code,
c) disassembling said first device control code to generate an intermediate code, and
d) assembling said intermediate code to generate a second device control code having a second format.

11. A method according to claim 10 wherein the method is performed during a boot sequence.

12. A method according to claim 10 wherein the method is performed after completion of a boot sequence.
